# EUROPÄISCHE PATENTSCHRIFT

(11) **EP 3 948 091 B1**
(45) Veröffentlichungstag und Bekanntmachung des Hinweises auf die Patenterteilung: **20.03.2024**
(21) Anmeldenummer: 20722465.0
(22) Anmeldetag: 24.03.2020
(51) Int. Cl.: F24C 7/08, F24C 15/00

(54) **VERFAHREN ZUM ZUBEREITEN EINES GARGUTS MIT OPTISCH ANGEZEIGTEN GARGUTZONEN DES GARGUTS, GARGERÄT UND COMPUTERPROGRAMMPRODUKT**
METHOD FOR PREPARING FOOD WITH OPTICALLY DISPLAYED FOOD ZONES OF THE FOOD, COOKING APPLIANCE AND COMPUTER PROGRAM PRODUCT
PROCÉDÉ DE PRÉPARATION D'UN PRODUIT À CUIRE AVEC DES ZONES DU PRODUIT À CUIRE INDIQUÉES VISUELLEMENT, APPAREIL DE CUISSON ET PRODUIT-PROGRAMME INFORMATIQUE

(30) Priorität: 01.04.2019 DE 102019204533
(43) Veröffentlichungstag der Anmeldung: 09.02.2022
(73) Patentinhaber: BSH Hausgeräte GmbH, 81739 München (DE)
(72) Erfinder: KUCHLER, Markus, 83257 Gstadt am Chiemsee (DE); RIGORTH, Kerstin, 84453 Mühldorf (DE); STERZ, Sebastian, 86845 Großaitingen (DE); VOGT, Matthias, 74182 Obersulm (DE)
(86) Internationale Anmeldenummer: PCT/EP2020/058154
(87) Internationale Veröffentlichungsnummer: WO 2020/200914

(56) Entgegenhaltungen:
- EP-A1- 2 746 678
- EP-A1- 3 156 734
- EP-A2- 2 251 609
- DE-A1-102015 225 859
- DE-A1-102016 107 617
- DE-U1-202015 009 620
- US-A1- 2017 208 652

## Beschreibung

Ein Aspekt der Erfindung betrifft ein Verfahren zum Zubereiten eines Garguts in einem Garraum eines Gargeräts. Das Gargut ist im Garraum angeordnet und es werden eine erste Gargutzone und zumindest eine zweite Gargutzone des Garguts bestimmt. Eine der Gargutzonen wird ausgewählt. Ein weiterer Aspekt der Erfindung betrifft ein Gargerät. Darüber hinaus betrifft ein Aspekt der Erfindung ein Computerprogrammprodukt.

Aus der DE 10 2016 107 617 A1 ist ein Verfahren zum Betreiben eines Gargeräts bekannt. Dort wird das gesamte Gargut im Garraum mit einer Beleuchtungseinrichtung beleuchtet, um ein Schattenbild des Garguts zu erzeugen.

Aus der DE 10 2015 225 859 A1 ist ein Gargerät bekannt. Darüber hinaus ist aus der DE 20 2015 009620 U1 ein Haushaltgerät mit einer Kamera bekannt.

Aus dem Stand der Technik sind vielfältige Gargeräte bekannt, in denen in einem Garraum optische Informationen dargestellt werden können. Beispielsweise ist es möglich, spezifische Einschubebenen optisch kenntlich zu machen, wie dies beispielsweise aus der DE 10 2009 001 093 A1 bekannt ist.

Spezifische Informationen über Gargutzonen eines Garguts sind dort jedoch nicht möglich.

In dem Zusammenhang ist es aus der US 2018/0220496 A1 bekannt, dass an einem Display des Gargeräts ein Bild des Garguts dargestellt werden kann und ein Nutzer verschiedene Gargutzonen dieses Garguts individuell kennzeichnen kann, beispielsweise einkreisen kann und somit auswählen kann. Zu einer derartigen nutzerseitig bestimmten Gargutzone können dann Informationen eingegeben werden. Darüber hinaus können auf dem Display beziehungsweise der Anzeigeeinheit dieses Gargeräts anderweitige Informationen angezeigt werden. Beispielsweise kann dies eine Information sein, dass das Gargut positionell verändert werden soll.

Bei dieser Ausgestaltung ist ein Nachteil jedoch darin zu sehen, dass diese Separierung in Gargutzonen nur an dem Display angezeigt und erkannt wird.

Die US 2017/208652 A1 offenbart eine Gestensteuerung zur Steuerung einer Ofenraumbeleuchtung.

Es ist Aufgabe der vorliegenden Erfindung, ein Verfahren, ein Gargerät und ein Computerprogrammprodukt zu schaffen, bei welchem beziehungsweise mit welchem einzelne Gargutzonen eines Garguts besser verständlich dargestellt werden können.

Diese Aufgabe wird durch ein Verfahren, ein Gargerät und ein Computerprogrammprodukt gemäß den Merkmalen der unabhängigen Ansprüche gelöst.

Ein Aspekt der Erfindung betrifft ein Verfahren zum Zubereiten eines Garguts in einem Garraum eines Gargeräts, bei welchem das Gargut im Garraum angeordnet wird. Es wird eine erste, nicht das ganze Gargut aufweisende, Gargutzone bestimmt Zusätzlich kann zumindest eine zweite, insbesondere nicht das ganze Gargut aufweisende beziehungsweise betreffende, Gargutzone bestimmt werden. Insbesondere wird eine Gargutzone diesbezüglich ausgewählt. Die ausgewählte Gargutzone wird mit einer Beleuchtungsvorrichtung des Gargeräts beleuchtet, sodass diese ausgewählte Gargutzone am Gargut selbst optisch wahrnehmbar kenntlich gemacht wird. Bei dem vorgeschlagenen Verfahren wird somit derjenige Teilbereich des gesamten Garguts, der eine Gargutzone darstellt und welcher bestimmt und ausgewählt wurde, optisch wahrnehmbar kenntlich gemacht. Es kann somit am Gargut selbst von einem Nutzer erkannt werden, welche Gargutzone bestimmt oder ausgewählt wurde und wo sie tatsächlich am Gargut sich befindet beziehungsweise bezüglich der gesamten Ausgestaltung des Garguts positionell gegeben ist. Die bestimmte Gargutzone wird auf der Oberfläche bzw. Außenseite des Garguts flächenmäßig definiert optisch wahrnehmbar kenntlich gemacht.

Es ist vorgesehen, dass zumindest eine der Gargutzonen durch einen Nutzer berührungslos durch eine Geste vorgegeben wird, wobei die Geste durch eine Erfassungseinheit des Gargeräts erfasst wird und durch Auswertung der erfassten Geste die zu erzeugende Gargutzone erkannt wird. Eine derartige Vorgehensweise ermöglicht eine sehr einfache berührungslose Vorgabe einer gewünschten Gargutzone, die dann auch einfach erkannt werden kann. Gerade dann, wenn bei Zubereitungsvorgängen beispielsweise Finger eines Nutzers verschmutzt sind, beispielsweise mit Fett oder Gewürzen oder dergleichen verschmutzt sind, kann durch eine derartige Vorgehensweise einerseits ein sicheres Bestimmen der Gargutzone erfolgen, andererseits ein Verschmutzen, insbesondere einer Eingabeeinheit, des Gargeräts vermieden werden.

Es ist vorgesehen, dass durch die berührungslose Geste ein Schattenbild auf einer Referenzfläche erzeugt wird und das Schattenbild durch die Erfassungseinheit des Gargeräts erfasst wird und durch Auswertung des Schattenbilds die zu erzeugende Gargutzone erkannt wird. Dies ist eine besonders vorteilhafte Ausführung, denn ein Schattenbild weist üblicherweise scharfe Konturen auf, die in besonders sicherer und eindeutiger Weise von einer Erfassungseinheit erkannt werden können. Durch die Erzeugung eines Schattenbilds nicht nur irgendwo, sondern auf einer Referenzfläche, wird diesen Vorteilen nochmals zusätzlich Rechnung getragen. Die Erfassungseinheit ist im besonderen Maße auf diese Referenzfläche gerichtet, um dann besonders zuverlässig ein Schattenbild zu erkennen. Darüber hinaus ist es durch eine derartige Ausführung auch verhindert, dass vielfältigste Schattenbilder, die irgendwo im Bereich des Gargeräts zufällig erzeugt werden, erfasst werden würden und fälschlicherweise als Geste zur Bestimmung einer Gargutzone verstanden werden würden. Um derartigen Fehlinterpretationen vorzubeugen, ist die Anzeige des Schattenbilds auf einer vorgegebenen beziehungsweise vorbestimmten Referenzfläche zusätzlich vorteilhaft. Die Referenzfläche ist eine Fläche des Gargeräts, insbesondere im Garraum.

Ein Gargut kann ein einzelnes, zusammenhängendes Objekt sein. Ein Gargut kann jedoch auch ein Ensemble von verschiedenen verzehrbaren und gleichzeitig im Garraum vorhandenen Lebensmitteln sein. Diese Objekte können separat sein und können von der Konsistenz und/oder dem Geschmack und/oder die Größe und/oder der Form etc. her unterschiedlich sein. Mit einem Gargut ist in dem Zusammenhang somit sowohl beispielsweise ein einzelnes Objekt, wie ein Fleischstück, ein Knödel, eine Kartoffel, Kroketten, Nudeln oder dergleichen gemeint sein. Ebenso ist ein Gargut jedoch auch die Kombination von beispielsweise einem Fleischstück und einer dazu separaten Beilage, sodass ein Gargut auch aus zwei separaten Objekten bestehen kann. In dem Zusammenhang kann auch jegliche Beilage zu einem derartigen Fleischstück oder sonstigem, insbesondere Hauptobjekt, als weiteres Objekt betrachtet werden.

Ist das Gargut nur ein einzelnes, zusammenhängendes Objekt, kann eine Gargutzone ein Teilbereich dieses Objekts sein. Bei einem Gargut, welches ein Ensemble aus mehreren separaten Objekten darstellt, kann ein Objekt eine erste Gargutzone und ein weiteres Objekt eine zweite Gargutzone sein. Zusätzlich kann dann jedoch auch vorgesehen sein, dass bei einem Objekt ein Teilbereich eine Gargutzone darstellt und nicht nur das gesamte Objekt eine Gargutzone darstellt.

In einer vorteilhaften Ausführung ist vorgesehen, dass dann, wenn zumindest zwei Gargutzonen eines Garguts bestimmt sind, eine Auswahl einer der beiden Gargutzonen erfolgt, wobei dann die ausgewählte Gargutzone mit einer Beleuchtungsvorrichtung des Gargeräts beleuchtet wird, sodass diese ausgewählte Gargutzone am Gargut optisch wahrnehmbar kenntlich gemacht wird.

Es kann auch vorgesehen sein, dass bei mehreren ausgewählten Gargutzonen diese Gargutzonen dann zumindest zeitweise gleichzeitig am Gargut selbst optisch wahrnehmbar kenntlich gemacht werden. So kann beispielsweise vorgesehen sein, dass die unterschiedlichen Gargutzonen in unterschiedlichen Lichtfarben optisch wahrnehmbar kenntlich gemacht sind und somit diese Gargutzonen am Gargut selbst mit der entsprechenden jeweiligen Lichtfarbe erscheinen und erkannt werden können. Durch eine derartige Ausgestaltung ist es ermöglicht, dass gleichzeitig und relativ einfach wahrnehmbar für einen Nutzer die individuellen Gargutzonen ersichtlich sind.

Grundsätzlich ist mit dem vorgeschlagenen Verfahren einerseits die intuitive Wahrnehmbarkeit und das intuitive Verständnis einer bestimmten Gargutzone verbessert, da es am Gargut selbst wahrgenommen werden kann und diesbezüglich mit der optischen Kenntlichmachung sehr einfach dargestellt und erkannt werden kann. Insbesondere ist die optische Wahrnehmbarkeit dahingehend gebildet, dass Licht im für den Menschen sichtbaren Spektralbereich durch die Beleuchtungsvorrichtung emittiert wird und dieses Licht am Gargut selbst erkannt wird.

In vorteilhafter Weise werden Informationen über ein spezifisches Zubereitungsszenario für die ausgewählte Gargutzone von einer Steuereinheit des Gargeräts empfangen. Damit ist eine automatische Zuordnung dahingehend ermöglicht, dass für eine ganz spezifische Gargutzone, die bestimmt und insbesondere ausgewählt wurde, auch individuelle Zubereitungsinformationen vorliegen und für diese Gargutzone genutzt werden und/oder diese Gargutzone charakterisieren, insbesondere bezüglich dem gewünschten Zubereitungsergebnis.

In einer vorteilhaften Ausführung ist vorgesehen, dass die Informationen durch einen Nutzer in eine Eingabeeinheit eingegeben werden. Die Eingabeeinheit kann Bestandteil des Gargeräts sein. Es ist jedoch auch möglich, dass die Eingabeeinheit eine zum Gargerät separate Einheit ist, die beispielsweise über drahtlose Kommunikation mit einer Steuereinheit des Gargeräts kommunizieren kann. Eine derartige externe Eingabeeinheit kann beispielsweise eine mobile beziehungsweise tragbare Einheit sein. Sie kann beispielsweise auch ein Kommunikationsendgerät eines Nutzers sein. Beispielsweise kann es in dem Zusammenhang ein Mobilfunkendgerät, wie ein Smartphone oder ein Tablet oder dergleichen sein.

In vorteilhafter Ausführung kann eine derartige Eingabe über Eingabeelemente der Eingabeeinheit erfolgen. Zusätzlich oder anstatt dazu kann jedoch auch eine Eingabe durch akustische Signale, insbesondere Sprachsignale, und/oder durch berührungslose Gesten eines Nutzers erfolgen. Insbesondere ist es ermöglicht, dass wahlweise auf zumindest zwei der genannten Eingabemöglichkeiten eine Eingabe erfolgen kann. Dadurch kann bei unterschiedlichsten Gegebenheiten eine bestmögliche, schnelle und sichere Eingabe erfolgen.

Vorzugsweise ist vorgesehen, dass die örtliche Lage der Gargutzone am Gargut und/oder die Größe der Gargutzone durch die zumindest eine berührungslose Geste vorgegeben wird. Durch diese Möglichkeit kann die hohe Flexibilität und Variabilität einer gewünschten Gargutzone erreicht werden, da einfach und schnell individuelle charakterisierende Parameter einer Gargutzone durch diese Geste vorgegeben werden können.

In einer vorteilhaften Ausführung ist vorgesehen, dass ein Gestenerzeugungselement in einen Lichtkegel der Beleuchtungsvorrichtung gehalten wird und dadurch ein Schattenbild erzeugt wird, welches auf der Referenzfläche erscheint und erfasst und ausgewertet wird. Dies ist eine weitere sehr vorteilhafte Ausführung, da in dem Zusammenhang insbesondere diejenige Beleuchtungsvorrichtung, die dann auch zum optischen Kenntlichmachen einer Gargutzone am Gargut selbst genutzt wird, diejenige ist, die den Lichtkegel bereitstellt, in welchen dieses Gestenerzeugungselement zum Erzeugen eines Schattenbilds gehalten wird. Damit kann einerseits die Anzahl der Bauelemente des Gargeräts reduziert werden, andererseits dann auch Bauraum eingespart werden. In besonders vorteilhafter Weise ist es durch diese Ausgestaltung dann auch ermöglicht, dass derjenige Lichtkegel, der erzeugt wird, um das Schattenbild zu generieren, wenn ein Gestenerzeugungselement in den Lichtkegel gehalten wird, auch gleichzeitig derjenige Lichtkegel ist, der auf das Gargut einstrahlt beziehungsweise projiziert wird, um die Gargutzone anzuzeigen. Mit ein und demselben Lichtkegel wird bei dieser vorteilhaften Ausführung somit eine optische Möglichkeit geschaffen, das Schattenbild grundsätzlich erst zu erzeugen, andererseits gleichzeitig damit dann auch den definierten und gewünschten Teilbereich des Garguts, nämlich die bestimmte Gargutzone, optisch am Gargut selbst darzustellen.

In einer vorteilhaften Ausführung ist vorgesehen, dass das Hineinhalten des Gestenerzeugungselements in den Lichtkegel erfasst wird und abhängig davon dann die Bewegung des Lichtkegels und/oder die Größe des Lichtkegels mit der Bewegung des Gestenerzeugungselements und der damit erzeugten Geste gekoppelt wird, sodass dadurch die Gargutzone vorgegeben wird und beleuchtet wird. Dies ist eine Spezifikation der bereits oben dargelegten vorteilhaften Ausführung. Es wird damit quasi eine dynamische Veränderung des Lichtkegels in Abhängigkeit von der Bewegung des Gestenerzeugungselements erzielt. Damit wird auch eine unverzügliche Veränderung des Lichtkegels bei einer Bewegung des Gestenerzeugungselements erreicht. Die Einstellung des Lichtkegels zur Erzeugung der optisch wahrnehmbaren Kenntlichmachung der Gargutzone am Gargut selbst wird somit quasi in Echtzeit bezüglich der Bewegung des Gestenerzeugungselements durchgeführt. Damit kann für einen Nutzer des Gestenerzeugungselements eine unverzügliche Rückmeldung gegeben werden, wie die Gargutzone aussieht und optisch am Gargut selbst kenntlich gemacht ist.

Vorzugsweise wird das Erzeugen der Gargutzone beendet, indem mit dem Gestenerzeugungselement eine Erzeugungsbeendenbewegung durchgeführt wird. Dadurch kann einfach und dennoch sicher erkannt werden, wann die Geste beendet wird und somit die Definition der Gargutzone abgeschlossen ist. Auch dadurch kann somit ein berührungsloses Beenden der Gargutzonendefinition erfolgen.

In vorteilhafter Weise wird als eine Erzeugungsbeendenbewegung ein abruptes beziehungsweise schnelles Herausziehen des Gestenerzeugungselements aus dem Lichtkegel durchgeführt. Dies ist eine einfache und dennoch leicht erkennbare Vorgehensweise, die somit auch zuverlässig und sicher erfasst werden kann. Dadurch ist das Beenden auch eindeutig und schnell erkennbar. Die Erfassungseinheit kann derartiges zuverlässig und schnell detektieren.

Vorzugsweise ist vorgesehen, dass Gargutzoneninformationen und/oder für eine Gargutzone ausgewählte oder vorgegebene Informationen über ein Zubereitungsszenario zur Wahrnehmung optisch direkt auf diese Gargutzone projiziert werden. Damit kann in übersichtlicher und eindeutig zu verstehender Art und Weise einem Nutzer beziehungsweise einem Beobachter am Gargut selbst eine entsprechende Information optisch präsentiert werden. Sind in dem Zusammenhang dann auch gegebenenfalls mehrere Informationen optisch darzustellen, ist dies wiederum eindeutig möglich und leicht verständlich. Bei einem Beobachten des Garguts, beispielsweise wenn die Tür des Gargeräts zum Garraum geöffnet ist oder auch bei geschlossener Tür und einem Durchblicken durch ein Sichtfenster der Tür, kann somit der Beobachter am Gargut selbst die einzelnen Teilbereiche, insbesondere eine optisch kenntlich gemachte Gargutzone, erkennen und zusätzlich dann auch noch die dazu verknüpften und charakterisierenden Informationen über ein Zubereitungsszenario am Gargut selbst erkennen. Damit kann er praktisch durch einen einzigen Blick mit einer gleichbleibenden Blickrichtung sowohl das Gargut betrachten als auch die dann zusätzlich erzeugten optischen Informationen bezüglich einer Gargutzone und zugeordneter Informationen. Auch bei diesbezüglich dann komplexen vielfältigen Informationen muss er mit seinem Blick nicht zwischen verschiedenen Anzeigepositionen am Gargerät wechseln, sodass auch das Verständnis der wahrzunehmenden Informationen einfach und umfänglich ermöglicht ist und der Überblick nicht verloren wird.

Dies ist insbesondere dann ein erheblicher Vorteil, wenn zumindest zeitweise gleichzeitig mehrere Gargutzonen optisch wahrnehmbar kenntlich gemacht sind und zusätzlich zumindest bei einer Gargutzone, insbesondere bei mehreren Gargutzonen, auch damit verknüpfte Gargutzoneninformationen und/oder vorgegebene Informationen über ein Zubereitungsszenario auf dem Gargut optisch projiziert sind.

In einer vorteilhaften Ausführung ist vorgesehen, dass bei mehreren Gargutzonen, die am Gargut selbst optisch wahrnehmbar kenntlich gemacht wurden, diese zumindest zeitweise gleichzeitig angezeigt werden. Es kann in dem Zusammenhang vorgesehen sein, dass eine Gargutzone in einer ersten Lichtfarbe optisch kenntlich gemacht wird und die zweite Gargutzone in einer dazu unterschiedlichen zweiten Lichtfarbe optisch kenntlich gemacht wird.

In einer vorteilhaften Ausführung ist vorgesehen, dass eine Handlungsweise für eine Gargutzone optisch an der Gargutzone selbst angezeigt wird. Eine Handlungsweise ist in dem Zusammenhang insbesondere ein positionelles Verändern des Garguts im Garraum. Eine derartige positionelle Veränderung kann dahingehend verstanden werden, dass das Gargut oder ein Teilbereich davon im Gargut verschoben wird beziehungsweise an eine andere Position gebracht wird. Ebenso kann unter einer derartigen Positionsveränderung jedoch auch verstanden werden, dass das Gargut oder der Teilbereich an der gleichen Position bleibt, jedoch gewendet beziehungsweise gedreht wird.

In einer vorteilhaften Ausführung kann vorgesehen sein, dass eine derartige optische Anzeige einer Handlungsweise für eine Gargutzone an dem Gargut selbst derart erfolgt, dass ein auf die Gargutzone projiziertes und dynamisch bewegtes Symbol angezeigt wird, welches insbesondere die durchzuführende Handlungsweise symbolhaft anzeigt. Damit kann beispielsweise durch einen Pfeil eine Richtung vorgegeben werden, in welche das Gargut beziehungsweise die Gargutzone im Garraum verschoben werden soll. Zusätzlich oder anstatt dazu kann beispielsweise durch einen gekrümmten Pfeil mit einer spezifischen Drehrichtung, die im Uhrzeigersinn oder entgegen dem Uhrzeigersinn sein kann, ein Wenden beziehungsweise Drehen des Garguts beziehungsweise eines Teilbereichs davon angezeigt werden. Derartige Symbole sind lediglich beispielhaft zu verstehen und nicht abschließend zu verstehen. Sie können statisch oder dynamisch angezeigt werden, beispielsweise auch blinkend oder als Lauflicht angezeigt sein.

Ein weiterer unabhängiger Aspekt der Erfindung betrifft ein Verfahren zum Zubereiten eines Garguts in einem Garraum eines Gargeräts, bei welchem das Gargut im Garraum angeordnet wird beziehungsweise darin angeordnet ist. Es wird zumindest eine erste, insbesondere nicht das ganze Gargut aufweisende beziehungsweise betreffende, Gargutzone bestimmt. Zusätzlich oder anstatt dazu kann zumindest eine zweite, insbesondere nicht das ganze Gargut aufweisende beziehungsweise betreffende Gargutzone bestimmt werden. Es kann vorgesehen sein, dass die zumindest eine Gargutzone ausgewählt wird. Sind zumindest zwei derartige Gargutzonen bestimmt, kann in vorteilhafter Weise eine der beiden Gargutzonen ausgewählt werden. Insbesondere wird eine mit der Gargutzone durchzuführende dynamische Handlungsweise, insbesondere eine Bewegung der Gargutzone, durch ein auf die Gargutzone projiziertes und dynamisch bewegtes Symbol symbolhaft optisch wahrnehmbar angezeigt.

Ausführungen des oben genannten Aspekts sind als vorteilhafte Ausführungen dieses weiteren unabhängigen Aspekts betreffend das Verfahren anzusehen.

Ein weiterer unabhängiger Aspekt der Erfindung betrifft ein Verfahren zum Zubereiten eines Garguts in einem Garraum eines Gargeräts, bei welchem das Gargut im Garraum angeordnet wird beziehungsweise angeordnet ist. Es wird eine erste, insbesondere nicht das ganze Gargut aufweisende beziehungsweise betreffende, Gargutzone bestimmt. Es kann zusätzlich zumindest eine zweite, insbesondere nicht das ganze Gargut aufweisende beziehungsweise betreffende, Gargutzone bestimmt werden. Die zumindest eine Gargutzone kann ausgewählt werden. Bei zumindest zwei bestimmten Gargutzonen kann eine der beiden Gargutzonen ausgewählt werden. Die zumindest eine Gargutzone wird durch einen Nutzer berührungslos durch eine Geste vorgegeben, wobei die Geste durch eine Erfassungseinheit des Gargeräts erfasst wird und durch Auswertung der Geste die zu erzeugende Gargutzone erkannt wird. Es wird durch die Geste ein Schattenbild auf einer Referenzfläche des Gargeräts erzeugt und das Schattenbild wird durch die Erfassungseinheit des Gargeräts erfasst und durch Auswertung des Schattenbilds wird die zu erzeugende Gargutzone erkannt. Ausführungen der oben genannten unabhängigen Aspekte betreffend die Verfahren sind als vorteilhafte Ausführungen des hier genannten weiteren unabhängigen Aspekts betreffend das Verfahren anzusehen.

Ein weiterer Aspekt der Erfindung betrifft ein Gargerät mit einem Gehäuse und einem in dem Gehäuse ausgebildeten Garraum. In dem Garraum kann ein Gargut zubereitet werden. Das Gargerät weist eine Beleuchtungsvorrichtung und eine Steuereinheit auf.

Das Gargerät ist zum Durchführen eines Verfahrens nach einem der vorher genannten Aspekte ausgebildet. Insbesondere wird ein derartiges Verfahren mit dem Gargerät durchgeführt.

Ein weiterer Aspekt der Erfindung betrifft ein Computerprogrammprodukt aufweisend Befehle, die bei der Ausführung des Programms durch einen Computer diesen veranlassen, die Schritte des Verfahrens gemäß einem der oben genannten unabhängigen Aspekte oder einer vorteilhaften Ausführung davon auszuführen.

In einer vorteilhaften Ausführung ist vorgesehen, dass das Gargerät eine Bedien- und/oder Anzeigeeinheit aufweist. Es kann vorgesehen sein, dass das Gargut und/oder bestimmte und ausgewählte Gargutzonen auf der elektronischen Anzeigeeinheit angezeigt werden können.

Bei der vorgeschlagenen Erfindung ist die Möglichkeit gegeben, insbesondere durch Lichtprojektion Informationen am Gargut selbst anzuzeigen. Dies können Informationen über Teilbereiche des Garguts selbst sein und/oder Informationen über den Garprozess sein. Die Informationen können somit optisch im Garraum selbst auf dem Gargut dargestellt werden.

Als Informationen, die den Zubereitungsprozess des Garguts betreffen, kann beispielsweise eine Temperaturinformation wie eine Oberflächentemperatur und/oder eine Kerntemperatur der Gargutzone angezeigt werden. Auch das Volumen kann als diesbezügliche Information angezeigt werden. Darüber hinaus können auch Informationen des Garraums selbst als Informationen des Zubereitungsprozesses angezeigt werden. Beispielsweise können dies die Temperatur und/oder die Luftfeuchtigkeit im Garraum sein. Ebenso kann beispielsweise als zusätzliche Information eines Zubereitungsprozesses das Garprogramm und/oder eine bereits abgelaufene Zeitdauer eines Garprogramms und/oder eine Restzeitdauer des Garprogramms optisch angezeigt werden. Derartige Informationen können alternativ zur oben dargestellten vorteilhaften Ausführung, bei welcher sie auf dem Gargut selbst, insbesondere auf der zugehörigen Gargutzone, optisch projiziert dargestellt werden, auch an einer anderen Stelle im Garraum, beispielsweise am Boden oder auf einem Gargutträger oder einer Seitenwand, die den Garraum begrenzt, optisch projiziert dargestellt werden. Als entsprechende Informationen können Buchstaben und/oder Zahlen und/oder Symbole angezeigt werden. Eine Information kann zusätzlich oder anstatt dazu auch durch eine Veränderung der Lichtfarbe, die durch das Licht der Beleuchtungsvorrichtung erzeugt wird, angezeigt werden. Zusätzlich oder anstatt dazu kann auch eine Intensität des abgestrahlten Lichts der Beleuchtungsvorrichtung als entsprechende optische Kenntlichmachung erfolgen.

Es kann auch vorgesehen sein, dass Informationen über das Gargut, insbesondere eine Gargutzone, und/oder Informationen über einen Zubereitungsprozess durch einen Nutzer selbst vorgegeben werden. Beispielsweise kann dies die Art des Lebensmittels und somit die Art des Garguts beziehungsweise eines Teilbereichs des Garguts betreffen. Darüber hinaus kann beispielsweise auch eine Temperaturinformation und/oder eine Information über eine Heizleistung eingegeben werden. Die Eingabe kann an einer Eingabeeinheit, die als berührsensitives Bedienfeld ausgebildet sein kann, erfolgen. Beispielsweise können hier entsprechende Auswahlen und Informationen vorgegeben sein. Auch kann, wie dies bereits oben genannt wurde, eine Spracheingabe und/oder eine Gesteneingabe erfolgen.

In einer vorteilhaften Ausführung kann auch vorgesehen sein, dass eine bestimmte Gargutzone durch einen Nutzer im Nachfolgenden dann noch individuell angepasst werden kann. Beispielsweise kann in dem Zusammenhang die Lage am Gargut und/oder die Größe angepasst werden. Dies kann beispielsweise durch eine Geste erfolgen, insbesondere über die Erfassung eines Schattenbilds der Geste. Dies ist insbesondere dann einfach ermöglicht, wenn zusätzlich ein Bild des Garraums auf der Anzeigeeinheit des Gargeräts angezeigt wird und die optischen Projektionen interaktiv und verzögerungsfrei an die Nutzerangaben angepasst werden kann.

Vorzugsweise weist das Gargerät zumindest eine optische Erfassungseinheit, wie eine Kamera, auf. Dadurch kann eine besonders einfache Erfassung einer Geste erfolgen. Die Auswertung der Geste kann dann entweder auf der direkten Bilderfassung des Gestenerkennungselements, das allgemein gesagt ein Finger oder ein Stab oder dergleichen sein kann, beruhen. Es kann aber auch eine Auswertung des sich abzeichnenden Schattenbilds, wenn dieses Gestenerzeugungselement den Lichtkegel teilweise abschattet, erfolgen. Beispielsweise kann dies so erfolgen, dass das Eindringen des Gestenerzeugungselements in den Lichtkegel mit dem dann unverzüglich erzeugten Schattenbild auf der Referenzfläche erkannt wird und nach wenigen Zentimetern dieses Eindringens des Gestenerzeugungselements in den Lichtkegel dieser Lichtkegel dann mit der Bewegung des Gestenerzeugungselements bewegungsgekoppelt wird und mit dieser Bewegung dann mitwandert. Dadurch ist auch eine Ausführung gegeben, bei welcher der Lichtkegel und somit der auf dem Gargut selbst beziehungsweise der Oberfläche des Garguts erzeugte Lichtfleck automatisch und dynamisch mit der Bewegung des Gestenerzeugungselements mitwandert. Dadurch ist eine besonders einfache Anpassung einer Position und/oder Größe einer Gargutzone beziehungsweise deren optische Fläche auf der Oberfläche des Garguts, ermöglicht.

Das oben bereits genannte vorteilhafte Beenden einer derartigen dynamischen Kopplung kann durch ein schnelles Herausziehen des Gestenerzeugungselements aus dem Lichtkegel erfolgen. Ist dies erfolgt, bleibt dann die eingestellte Ausgestaltung des Lichtkegels vorzugsweise erhalten beziehungsweise verharrt in der vorab gebildeten Ausgestaltung.

Bezüglich einer berührungslos zu erzeugenden Geste kann dies mit einem Gestenerzeugungselement, jedoch auch mit beispielsweise zumindest zwei separaten Gestenerzeugungselementen erfolgen. Dadurch können auch komplexere Gesten erzeugt werden, die ebenfalls erkannt werden.

Das Zusammenspiel einer berührungslosen Geste im dreidimensionalen Raum, insbesondere im Garraum selbst, mit einer entsprechenden gerichteten Beleuchtung für die optische Auswertung ist vorteilhaft, da das Gestenerzeugungselement einen gut auswertbaren Schatten wirft und/oder für die direkte Bildauswertung gut durch den Lichtkegel angeleuchtet wird und sich gut von dem ansonsten dunklen Garraumhintergrund abhebt.

Vorzugsweise wird diese Beleuchtung im Garraum bezüglich der Erzeugung der Gargutzone zeitgleich mit der Änderung der Gargutzone angepasst. Werden unterschiedliche Temperaturziele für die einzelnen Gargutzonen eingestellt, ist es möglich, diese durch unterschiedliche Lichtfarben optisch zu kennzeichnen. Wählt ein Nutzer in einer vorteilhaften Ausführung für eine Gargutzone beispielsweise eine Zieltemperatur von beispielsweise 40°, kann vorgesehen sein, dass diese Gargutzone in einer blauen Lichtfarbe optisch am Gargut selbst kenntlich gemacht wird und eine dazu weitere zweite Gargutzone in einer anderen Lichtfarbe, beispielsweise in Rot, an dem Gargut selbst optisch kenntlich gemacht wird. Es ist dann auch durch diese Ausgestaltung einfach und intuitiv ersichtlich, welche Gargutzone stärker erwärmt wird. Es ist möglich, dass eine Anzeige auf einer Anzeigeeinheit dann erscheint, wenn die Tür zum Verschließen des Garraums geöffnet wird. Es kann jedoch auch eine Anzeige bei geschlossener Tür auf der Anzeigevorrichtung erfolgen. Neben Symbolen, Buchstaben und Zahlen können jedoch auch Kurzbezeichnungen oder Kurzsätze angezeigt werden.

Darüber hinaus kann der Nutzer durch die Lichtprojektion auch bei der Positionierung des Garguts angeleitet werden. So kann beispielsweise eine Mittelposition beleuchtet werden und somit angezeigt werden oder beim Einstellen unterschiedlichen Garguts die geeignetste Anordnung durch Lichtprojektion vorgegeben werden.

Es kann auch vorgesehen sein, dass die Notwendigkeit einer Handlung des Nutzers anhand verschiedener Kriterien erkannt wird oder fester Bestandteil eines Programmablaufs ist. Beispielsweise kann bei einer gewissen vorgegebenen Zeitdauer oder beim Erreichen einer Maximaltemperatur eine entsprechende Handlungsweise vorliegen. Auslöser für eine Aufforderung einer beispielsweise Neupositionierung oder einem Wenden eines Garguts beziehungsweise einer Gargutzone kann dahingehend erfolgen, dass durch ein Kamerabild oder eine Laserpositionsbestimmung eine Position des Garguts außerhalb der Mitte festgestellt wird. Da üblicherweise bei den Gargeräten auf ein in der Mitte befindliches Gargut optimierte Abläufe vorgegeben sind, kann diesbezüglich dann eine Umpositionierung sinnvoll sein. Zusätzlich oder anstatt dazu kann eine Handlungsweise dann erforderlich sein, wenn kein geeignetes Erwärmungsmuster durch die Steuereinheit gefunden wird, mit dem die gewünschte Erwärmung erreicht werden könnte. Zusätzlich oder anstatt dazu kann eine derartige Handlungsweise dann vorgesehen sein, wenn durch die Steuereinheit erkannt wird, dass keine Verbesserung des Qualitätswerts bei der Zubereitung des Garguts stattfinden würde. Eine Einteilung in Gargutzonen kann auch automatisch durch das Gargerät erfolgen. Dies kann beispielsweise durch Bilderkennung und/oder durch Höheninformationen des Garguts selbst erfolgen. Zusätzlich oder anstatt dazu können jedoch auch Breiten- und Tiefeninformationen des Garguts genutzt werden.

Bei einer automatischen Einteilung kann vorgesehen sein, dass eine Gargutzone nachfolgend durch einen Nutzer bestätigt wird. Beispielsweise kann dies durch einfaches Tippen auf das Gargut an dieser Gargutzone erfolgen. Dies kann dann durch eine Erfassungseinheit des Gargeräts erfasst werden. Dadurch ist eine einfache Auswahl ermöglicht. Es muss hier keine Geste durch den Nutzer erzeugt werden.

Die Beleuchtungsvorrichtung kann eine Leuchtdiode oder mehrere Leuchtdioden als Lichtquellen aufweisen. Die Beleuchtungsvorrichtung kann auch beweglich ausgebildet sein. Sie kann beispielsweise schwenkbar und/oder drehbar am Gargerät angeordnet sein. Dadurch können individuelle und gerichtete Beleuchtungsmuster ermöglicht werden. Alternativ können auch bewegliche optische Elemente, wie beispielsweise ein Spiegel oder eine Linse, vorgesehen sein. Damit lassen sich ebenfalls individuellere und flexiblere Lichtkegel erzeugen, sodass auch vielfältigste Beleuchtungsszenarien eines Garguts selbst im Hinblick auf die damit bewirkte Darstellung einer Gargutzone und/oder von zusätzlichen Informationen ermöglicht sind.

Ebenso ist es möglich, dass eine Matrix aus einzelnen Leuchtpunkten erzeugt und auf ein Objekt projiziert werden. Um unterschiedliche Lichtfarben zu erreichen, kann auch mit Farbfiltern gearbeitet werden. Ebenso einsetzbar ist auch eine Ausführung eines Beamers, beispielsweise mittels eines DLP (Digital Light Processor)-Projektors erfolgen, dessen Projektionslinse an einer Begrenzungswand eines Garraums angebracht ist.

Um auf unebenen Gargut gut erkennbare Informationen abbilden zu können, kann es vorteilhaft sein, eine Verzerrungskorrektur bei der Informationsprojektion auf die Gargutzone vorzunehmen. Insbesondere ist hier ein Projektor vorgesehen. Dazu kann beispielsweise ein Linien- oder Schachbrettmuster auf das Gargut projiziert werden, welches von einer Kamera aufgenommen wird. Aus der aufgezeichneten Verzerrung kann eine Korrektur berechnet werden, welche aus einer typischen Sichtposition eines Benutzers heraus vorteilhafterweise eine unverzerrte Wahrnehmung der Darstellung ermöglicht.

Der Lichtkegel beziehungsweise diejenige Flächenform, die durch den Lichtkegel auf dem Gargut erzeugt werden kann, kann in verschiedensten Formen gestaltet sein und kann eckig oder eckenfrei sein. Beispielsweise kann eine runde oder elliptische Flächenform erzeugt werden. In der Größe ist eine Anpassung einer derartigen Fläche eines Lichtkegels durch verschiebbare Reflektoren und/oder Linsen anpassbar. In dem Zusammenhang können unterschiedliche Fokussierungen eingestellt werden. Eine elliptische Form hat beispielsweise den Vorteil, dass eine Handlungsweise, die ein Drehen beziehungsweise Wenden des Garguts symbolisiert, optisch sehr leicht durch eine sich drehende Ellipse angezeigt und nachvollzogen werden kann. Ein Wenden eines Garguts kann beispielsweise dadurch angezeigt werden, dass der Leuchtpunkt beziehungsweise der Lichtfleck, der das Gargut beleuchtet, kontinuierlich zu einer immer schnelleren Ellipse kontrahiert wird, die dann wieder zu einem Lichtfleck ursprünglicher Größe expandiert. Dadurch kann quasi der Schattenwurf, den das Gargut beim Wenden auf einer Unterlage erzeugen würde, mit dem Lichtschein symbolisch dargestellt werden und ist leicht verständlich.

Ein weiterer Vorteil ist darin zu sehen, dass im Vergleich zum Stand der Technik ein deutlich kleineres Display beziehungsweise eine deutlich kleinere Anzeigevorrichtung am Gargerät verbaut werden muss, da keine diesbezügliche großflächige Darstellung erfolgen muss, um am Display die Auswahl einer Gargutzone vorzunehmen. Damit kann ein kompakteres Gerät gebaut werden beziehungsweise der frontseitige Platzbedarf für ein derartiges Display kann reduziert werden. Darüber hinaus sind im Vergleich zum Stand der Technik die optische Wahrnehmbarkeit einer Gargutzone und/oder zusätzliche Informationen auch bei geöffneter Tür ermöglicht. Dies ist im Stand der Technik nicht möglich, da somit bei aufgeschwenkter Tür die Sicht auf die Anzeigevorrichtung nicht mehr möglich ist. Bevorzugte Positionen für ein Gargut können direkt im Garraum selbst an der entsprechenden Position optisch wahrnehmbar projiziert und angezeigt werden und ermöglichen somit ein leicht intuitives Verständnis. Darüber hinaus kann auch ein digitales Vorverarbeiten von angezeigten Bildinformationen aus dem Garraum vermieden werden. Kanten oder Abgrenzungen des Garguts werden nicht auf dem Bild, das insbesondere durch eine Kamera aufgenommen wird, beispielsweise durch ein hinzugefügtes zweites Bildlayer dargestellt. Derartige Kanten und Abgrenzungen ergeben sich nämlich direkt und ohne weitere Bildbearbeitung aus dem Projektionsergebnis im Garraum selbst.

Mit Angaben wie "oben", "unten", "vorne", "hinten, "horizontal", "vertikal", "Tiefenrichtung", "Breitenrichtung", "Höhenrichtung" und dergleichen sind die bei bestimmungsgemäßem Gebrauch und bestimmungsgemäßem Anordnen des Gargeräts gegebenen Positionen und Orientierungen angegeben.

Ausführungsbeispiele der Erfindung werden nachfolgend anhand schematischer Zeichnungen näher erläutert. Dabei zeigen:
- Fig. 1: eine schematische Darstellung eines Ausführungsbeispiels eines erfindungsgemäßen Gargeräts;
- Fig. 2: eine Darstellung eines weiteren Ausführungsbeispiels des Gargeräts gemäß Fig. 1;
- Fig. 3: ein weiteres Ausführungsbeispiel des Gargeräts gemäß Fig. 1 und Fig. 2; und
- Fig. 4: ein weiteres Ausführungsbeispiel des Gargeräts gemäß Fig. 1 bis Fig. 3.

In den Figuren werden gleiche oder funktionsgleiche Elemente mit den gleichen Bezugszeichen versehen.

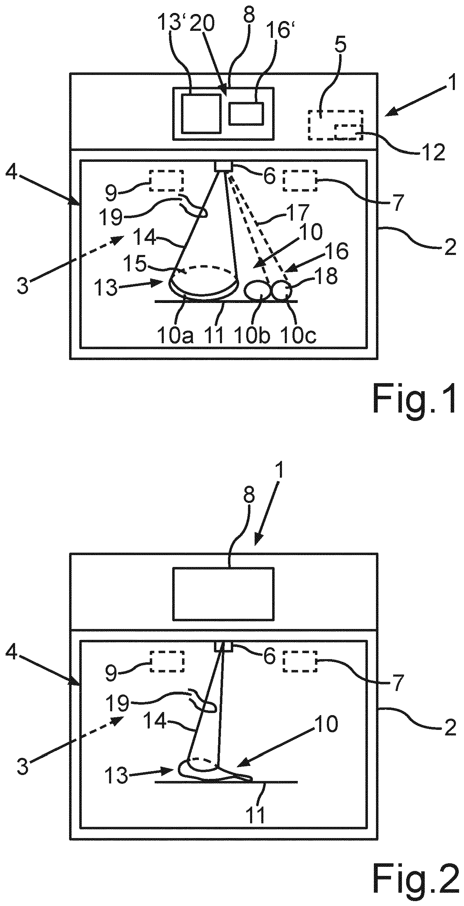

In Fig. 1 ist in einer vereinfachten Frontansicht ein Gargerät 1 gezeigt. Das Gargerät 1 kann ein Backofen oder ein Dampfgargerät oder ein Mikrowellengargerät sein. Das Gargerät 1 weist ein Gehäuse 2 auf. In dem Gehäuse 2 ist ein Garraum 3 ausgebildet. Der Garraum 3 ist durch Wände einer Muffel begrenzt. Die Muffel ist in dem Gehäuse 2 angeordnet. Frontseitig ist der Garraum 3 durch eine Tür 4 verschließbar, die in Fig. 1 im geschlossenen Zustand gezeigt ist.

Die Tür 4 weist in vorteilhafter Weise ein Sichtfenster auf, durch welches im geschlossenen Zustand der Tür 4 von außen in den Garraum 3 geblickt werden kann.

Das Gargerät 1 weist darüber hinaus eine Steuereinheit 5 auf. Mit der Steuereinheit 5 werden Funktionseinheiten des Gargeräts 1, wie beispielsweise eine Beleuchtungsvorrichtung 6 und/oder Heizeinheiten, von denen eine Heizeinheit 7 in Position, Anzahl und Ausgestaltung lediglich symbolhaft dargestellt ist, und/oder eine Bedien- und/oder Anzeigeeinheit 8 gesteuert. Auch weitere Funktionseinheiten des Gargeräts 1, die zumindest eine Erfassungseinheit 9 betrifft, können durch die Steuereinheit 5 gesteuert werden. Zusätzlich oder anstatt dazu kann eine Kommunikation zwischen der Steuereinheit 5 und derartigen Funktionseinheiten erfolgen. Die Erfassungseinheit 9 ist so angeordnet, dass sie Gargut 10, welches im Garraum 3 angeordnet ist, erfassen kann. Die Erfassungseinheit 9 ist insbesondere eine optische Erfassungseinheit. Sie kann beispielsweise eine Kamera sein.

Darüber hinaus kann dieses Gargerät 1 eine Eingabeeinheit aufweisen. Die Eingabeeinheit kann beispielsweise auch die Bedien- und/oder Anzeigeeinheit 8 sein. Beispielsweise kann diese Einheit 8 ein berührsensitives Bedienfeld aufweisen.

Ebenso kann die Eingabeeinheit zum Erfassen von akustischen Signalen, insbesondere von Sprachsignalen, ausgebildet sein. Zusätzlich oder anstatt dazu kann die Eingabeeinheit zur Erfassung einer Geste ausgebildet sein, die insbesondere eine berührungslose Geste ist. Diese kann mit einem Gestenerzeugungselement, wie einem Finger, einer Hand oder einem Stab oder Stift oder dergleichen erfolgen.

Das Gargut 10, welches ein Lebensmittel ist, kann durch ein einziges Objekt, insbesondere ein zusammenhängendes Objekt, gebildet sein. Es kann jedoch auch vorgesehen sein, dass das Gargut 10 durch mehrere separate Objekte, die Lebensmittel darstellen, gebildet ist. So ist im Ausführungsbeispiel gemäß Fig. 1 das Gargut 10 durch ein erstes Objekt 10a, ein dazu separates zweites Objekt 10b und ein weiteres dazu separates Objekt 10c gebildet. Das Gargut 10 ist somit bei dieser Ausführung als ein Ensemble von mehreren separaten Lebensmitteln gebildet.

Dieses Gargut 10 ist auf einem Gargutträger 11 angeordnet. Dieser Gargutträger kann beispielsweise ein Teller oder eine Pfanne oder ein Backblech oder ein Gitterrost etc. sein. Insbesondere ist der Gargutträger 11 zerstörungsfrei lösbar aus dem Garraum 3 entnehmbar.

Das Gargerät 1 weist insbesondere auch ein Computerprogrammprodukt 12 auf. Das Computerprogrammprodukt 12 kann in der Steuereinheit 5 abgelegt sein.

Das Computerprogrammprodukt 12 weist Befehle auf, die bei der Ausführung des Programms durch einen Computer, der durch die Steuereinheit 5 gebildet sein kann, diesen veranlasst, Schritte des Verfahrens zum Zubereiten eines Garguts 10 in dem Garraum 3 durchzuführen.

Insbesondere ist bei dem Verfahren vorgesehen, dass das Gargut 10 im Garraum 3 angeordnet ist. Bei dem Verfahren wird eine erste, insbesondere nicht das ganze Gargut 10 betreffende Gargutzone 13 bestimmt. Diese Gargutzone 13 kann danach ausgewählt werden. Die ausgewählte Gargutzone 13, die somit einen Teilbereich des gesamten Garguts 10 darstellt, wird mit der Beleuchtungsvorrichtung 6 beleuchtet, sodass die ausgewählte Gargutzone 13 am Gargut 10 selbst optisch wahrnehmbar kenntlich gemacht wird. Im in Fig. 1 gezeigten Ausführungsbeispiel ist dazu vorgesehen, dass durch eine Lichtquelle, welche zumindest eine Leuchtdiode sein kann, der Beleuchtungsvorrichtung 6 ein Lichtkegel 14 erzeugt wird, der die Gargutzone 13 anstrahlt beziehungsweise beleuchtet. Auf dem Gargut 10 ist somit an einem Teilbereich der Oberfläche ein Lichtfleck 15 durch den Lichtkegel 14 erzeugt, der flächenmäßig diese Gargutzone 13 optisch kenntlich macht.

Beim hier gezeigten Ausführungsbeispiel ist die Gargutzone 13 das vollständige Objekt 10a. Es kann jedoch auch nur ein Teilbereich des Objekts 10a sein. Der restliche Teilbereich des Garguts 10, der hier durch die weiteren Objekte 10b und 10c gebildet ist, ist nicht Bestandteil dieser Gargutzone 13 und somit durch den Lichtkegel 14 nicht angestrahlt.

Es kann jedoch auch vorgesehen sein, dass eine zumindest zweite Gargutzone 16, die hier beispielhaft gestrichelt eingezeichnet ist, bestimmt wird. Diese weitere Gargutzone 16, die eine zweite Gargutzone sein kann, kann dann auch ausgewählt werden und durch die Beleuchtungsvorrichtung 6 flächengenau angestrahlt werden, sodass sie optisch wahrnehmbar kenntlich gemacht ist. Im gezeigten Ausführungsbeispiel ist durch diese zweite Gargutzone 16 beispielhaft das Objekt 10c des Garguts 10 optisch wahrnehmbar kenntlich gemacht. So kann beispielsweise dann, wenn das Objekt 10a beispielsweise ein Fleischstück ist und das Objekt 10c beispielsweise eine Beilage wie ein Knödel oder dergleichen ist, die optische Kenntlichmachung dieser beiden unterschiedlichen Gargutzonen 13 und 16 erfolgen, insbesondere auch gleichzeitig erfolgen.

Es kann vorgesehen sein, dass zumindest zeitweise gleichzeitig der Lichtkegel 14 und der Lichtkegel 17, der einen Lichtkegel zur optischen Kenntlichmachung der zweiten Gargutzone 16 darstellt, erzeugt sind. Die beiden Lichtkegel 14 und 17 können in unterschiedlichen Lichtfarben erzeugt sein. Damit sind die Projektionsflächen beziehungsweise die Lichtflecke 15 und 18 auf den Oberflächen der Objekte 10a und 10c farblich unterschiedlich gekennzeichnet.

Es kann vorgesehen sein, dass Informationen über ein spezifisches Zubereitungsszenario für die ausgewählte Gargutzone 13 und/oder 16 von der Steuereinheit 5 des Gargeräts 1 empfangen werden. Diese Informationen können beispielsweise durch einen Nutzer in eine Eingabeeinheit, die die Bedien- und/oder Anzeigeeinheit 8 sein kann, eingegeben werden und/oder über Sensoren des Gargeräts 1 erhalten werden. Die Eingabe kann über Eingabeelemente manuell erfolgen und/oder durch eine Spracheingabe und/oder durch eine berührungslose Geste.

Besonders vorteilhaft ist es, dass zumindest eine der Gargutzonen 13, 16 durch einen Nutzer berührungslos zu einer Erfassungseinheit durch eine Geste vorgegeben wird, wobei die Geste durch die Erfassungseinheit, die die Erfassungseinheit 9 sein kann, erfasst wird und durch Auswertung der Geste die zu erzeugende Gargutzone 13 und/oder 16 erkannt wird. Insbesondere können die örtliche Lage der Gargutzone 13, 16 am Gargut 10 und/oder die Größe der Gargutzone 13, 16, insbesondere die Lichtflecken 15, 18 durch die zumindest eine berührungslose Geste vorgegeben werden.

Erfindungsgemäß ist vorgesehen, dass durch diese berührungslose Geste ein Schattenbild auf einer Referenzfläche erzeugt wird und das Schattenbild durch die Erfassungseinheit des Gargeräts 1 erfasst wird und durch Auswertung des Schattenbilds die zu erzeugende Gargutzone 13, 16 erkannt wird.

In vorteilhafter Ausführung ist es vorgesehen, dass ein Gestenerzeugungselement, wie beispielsweise ein Finger, in den Lichtkegel 14 der Beleuchtungsvorrichtung 6 gehalten wird und dadurch ein Schattenbild erzeugt wird, welches erfasst und ausgewertet wird. Beispielsweise kann das Schattenbild in dem Zusammenhang auf dem Gargut 10 selbst oder auf dem Gargutträger 11 erzeugt werden, welches beides Beispiele für Referenzflächen sein können. Es kann auch wahlweise zwischen diesen Möglichkeiten entschieden werden, wo das Schattenbild erzeugt wird. Dieses Hineinhalten des Gestenerzeugungselements 19 in dem hier gezeigten Beispiel in den Lichtkegel 14 wird erfasst, insbesondere durch die Erfassungseinheit 9. Abhängig davon wird dann die Bewegung des Lichtkegels 14 und/oder die Größe des Lichtkegels 14 mit der Bewegung des Gestenerzeugungselements 19 und der damit erzeugten Geste gekoppelt, sodass dadurch die Gargutzone 13 vorgegeben wird und flächenmäßig spezifisch auf dem Gargut 10 beleuchtet wird. Selbiges kann auch mit der beispielhaft gezeigten zumindest einen weiteren Gargutzone 16 in diesem Lichtkegel 17 erfolgen.

Insbesondere wird dieses Erzeugen einer Gargutzone 13 beendet, indem mit dem Gestenerzeugungselement 19 eine Erzeugungsbeendenbewegung durchgeführt wird. Diese Erzeugungsbeendenbewegung kann beispielsweise ein schnelles Herausziehen des Gestenerzeugungselements 19 aus dem Lichtkegel 14 sein.

Es kann in einer vorteilhaften Ausführung vorgesehen sein, dass auf der Bedien- und/oder Anzeigeeinheit 8 ein Bild 20 angezeigt wird, in dem auch die zumindest eine Gargutzone 13, 16 als Bildelemente 13' und 16' angezeigt wird. Im vorliegenden Fall kann dies eine Anzeige der Gargutzonen 13 und 16 sein.

In Fig. 2 ist in einer weiteren vereinfachten Darstellung eine Frontansicht des Gargeräts 1 gezeigt. Bei dieser Ausführung ist das Gargut 10 durch ein einziges zusammenhängendes Objekt 10a, hier auch ein Festkörper, gebildet. Eine Gargutzone 13 stellt hier einen Teilbereich dieses Garguts 10 dar und somit einen Teilbereich des Objekts 10a dar.

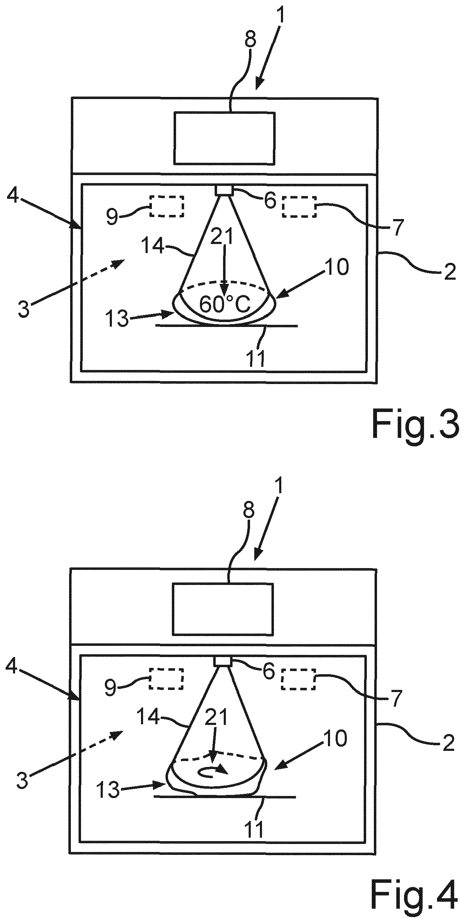

In Fig. 3 ist in einer weiteren beispielhaften Darstellung das Gargerät 1 gezeigt. Bei dieser Ausführung kann zusätzlich oder anstatt dazu eine Information über ein spezifisches Zubereitungsszenario des Garguts 10 optisch wahrnehmbar auf der Oberseite des Garguts 10 selbst projiziert werden. Dies kann auch zusätzlich zur Darstellung der Gargutzone, hier der Gargutzone 13, erfolgen. Insbesondere kann vorgesehen sein, dass die Projektion dieser Informationen über ein Zubereitungsszenario in demjenigen Flächenbereich beziehungsweise dem Lichtfleck 15 auf der Oberseite beziehungsweise Außenseite des Garguts 10 optisch wahrnehmbar angezeigt beziehungsweise projiziert wird, die flächenmäßig die Gargutzone 13 auf dieser Oberseite des Garguts 10 bildet. Es wird also innerhalb des Flächenbereichs der Lichtfläche beziehungsweise des Lichtflecks 15 auch diese zusätzliche Information über den Zubereitungsprozess dargestellt. Diese Information 21 ist in Fig. 3 lediglich beispielhaft zu verstehen und zeigt eine Temperaturinformation. Dies kann beispielsweise eine Kerntemperatur des Garguts 10, insbesondere im Bereich der Gargutzone, sein oder kann eine Oberflächentemperatur sein.

Es kann jedoch auch vorgesehen sein, dass diese Information 21 nicht auf das Gargut 10 selbst optisch projiziert ist, sondern beispielsweise an einer den Garraum 3 begrenzenden Wand optisch wahrnehmbar angezeigt ist und darauf durch die Beleuchtungsvorrichtung 6 projiziert ist.

In Fig. 4 ist ein weiteres Ausführungsbeispiel des Gargeräts 1 gezeigt. Bei dieser Ausführung ist im Unterschied zu Fig. 4 als eine derartige Information 21 nicht eine Zahlen- und/oder Buchstabenkombination dargestellt, sondern ein Symbol. Beispielsweise ist hier ein Pfeil als Symbol angezeigt. Dieser Pfeil kann gekrümmt sein. Er kann in dem Zusammenhang die Information symbolhaft darstellen, dass das Gargut 10 in seiner gesamten Position zu anderen Elementen des Garraums angeordnet bleibt, aber gedreht oder gewendet wird.

Eine Information 21 kann auch bei den Ausführungsbeispielen gemäß Fig. 1 und 2 entsprechend vorhanden sein.

### Bezugszeichenliste

- 1: Gargerät
- 2: Gehäuse
- 3: Garraum
- 4: Tür
- 5: Steuereinheit
- 6: Beleuchtungsvorrichtung
- 7: Heizeinheit
- 8: Bedien- und/oder Anzeigeeinheit
- 9: Erfassungseinheit
- 10: Gargut
- 10a: erstes Objekt
- 10b: zweites Objekt
- 10c: drittes Objekt
- 11: Gargutträger
- 12: Computerprogrammprodukt
- 13: Gargutzone
- 13': Bildelement
- 14: Lichtkegel
- 15: Lichtfleck
- 16: Gargutzone
- 16': Bildelement
- 17: Lichtkegel
- 18: Lichtfleck
- 19: Gestenerzeugungselement
- 20: Bild
- 21: Information

## Patentansprüche

1. Verfahren zum Zubereiten eines Garguts (10) in einem Garraum (3) eines Gargeräts (1), bei welchem das Gargut (10) im Garraum (3) angeordnet ist und bei welchem zumindest eine erste, nicht das ganze Gargut betreffende Gargutzone (13, 16) bestimmt wird, wobei die bestimmte Gargutzone (13, 16) mit einer Beleuchtungsvorrichtung (6) des Gargeräts (1) beleuchtet wird, so dass die bestimmte Gargutzone (13, 16) am Gargut (10) optisch wahrnehmbar kenntlich gemacht wird, **dadurch gekennzeichnet, dass** die zumindest eine Gargutzone (13, 16) durch einen Nutzer durch eine berührungslose Geste vorgegeben wird, wobei die Geste durch eine Erfassungseinheit (9) des Gargeräts (1) erfasst wird und durch Auswertung der Geste die zu erzeugende Gargutzone (13, 16) erkannt wird, wobei durch die Geste ein Schattenbild auf einer Referenzfläche erzeugt wird und das Schattenbild durch die Erfassungseinheit (9) des Gargeräts (1) erfasst wird und durch Auswertung des Schattenbilds die zu erzeugende Gargutzone (13, 16) erkannt wird.

2. Verfahren nach Anspruch 1, **dadurch gekennzeichnet, dass** Informationen über ein spezifisches Zubereitungsszenario für die bestimmte Gargutzone (13, 16) von einer Steuereinheit (5) des Gargeräts (1) empfangen werden.

3. Verfahren nach Anspruch 2, **dadurch gekennzeichnet, dass** die Informationen durch einen Nutzer in eine Eingabeeinheit eingegeben werden.

4. Verfahren nach einem der vorhergehenden Ansprüche, **dadurch gekennzeichnet, dass** die örtliche Lage der Gargutzone (13, 16) am Gargut (10) und/oder die Größe der Gargutzone (13, 16) durch die zumindest eine berührungslose Geste vorgegeben wird.

5. Verfahren nach einem der vorhergehenden Ansprüche, **dadurch gekennzeichnet, dass** ein Gestenerzeugungselement (19) in einen Lichtkegel (14, 17) der Beleuchtungsvorrichtung (6) gehalten wird und dadurch ein Schattenbild erzeugt wird, welches erfasst und ausgewertet wird.

6. Verfahren nach Anspruch 5, **dadurch gekennzeichnet, dass** das Hineinhalten des Gestenerzeugungselements (19) in den Lichtkegel (14, 17) erfasst wird, und abhängig davon dann die Bewegung des Lichtkegels (14, 17) und/oder die Größe des Lichtkegels (14, 17) mit der Bewegung des Gestenerzeugungselements (19) und der damit erzeugten Geste gekoppelt wird, so dass dadurch die Gargutzone (13, 16) vorgegeben wird und auf dem Gargut (10) durch die Beleuchtung optisch wahrnehmbar kenntlich gemacht wird.

7. Verfahren nach Anspruch 6, **dadurch gekennzeichnet, dass** das Erzeugen der Gargutzone (13, 16) beendet wird, indem mit dem Gestenerzeugungselement (19) eine Erzeugungsbeendenbewegung durchgeführt wird.

8. Verfahren nach Anspruch 7, **dadurch gekennzeichnet, dass** als eine Erzeugungsbeendenbewegung ein schnelles Herausziehen des Gestenerzeugungselements (19) aus dem Lichtkegel (14, 17) durchgeführt wird.

9. Verfahren nach einem der vorhergehenden Ansprüche, **dadurch gekennzeichnet, dass** Gargutzoneninformationen und/oder für eine Gargutzone (13, 16) ausgewählte oder vorgegebene Informationen (21) über ein Zubereitungsszenario zur Wahrnehmung optisch direkt auf diese Gargutzone (13, 16) projiziert werden.

10. Verfahren nach einem der vorhergehenden Ansprüche, **dadurch gekennzeichnet, dass** zumindest zwei Gargutzonen (13, 16) zumindest zeitweise gleichzeitig am Gargut (10) optisch kenntlich gemacht werden, wobei dazu die eine Gargutzone (13) in einer ersten Lichtfarbe optisch kenntlich gemacht wird und die zweite Gargutzone (16) in einer dazu unterschiedlichen zweiten Lichtfarbe optisch kenntlich gemacht wird.

11. Verfahren nach einem der vorhergehenden Ansprüche, **dadurch gekennzeichnet, dass** eine Handlungsweise für eine, insbesondere Bewegung der, Gargutzone (13, 16) optisch wahrnehmbar an der Gargutzone (13, 16) angezeigt wird, insbesondere durch ein auf die Gargutzone (13, 16) projiziertes und dynamisch bewegtes Symbol (21) die durchzuführende Handlungsweise symbolhaft angezeigt wird.

12. Gargerät (1) mit einem Gehäuse (2) und einem in dem Gehäuse (2) ausgebildeten Garraum (3), in dem ein Gargut (10) zubereitet werden kann, wobei das Gargerät (1) eine Beleuchtungsvorrichtung (6), eine Gestenerfassungseinheit (9) und eine Steuereinheit (5) aufweist, wobei das Gargerät (1) zum Durchführen eines Verfahrens nach einem der vorhergehenden Ansprüche ausgebildet ist.

13. Computerprogrammprodukt (12), aufweisend Befehle, die bei der Ausführung des Programms durch das Gargerät nach Anspruch 12 veranlasst, die Schritte des Verfahrens nach Ansprüchen 1,2 und 4-11 auszuführen.

## Claims

1. Method for preparing food (10) in a cooking chamber (3) of a cooking appliance (1), in which the food (10) is arranged in the cooking chamber (3) and in which at least a first food zone (13, 16), which does not apply to the entire food, is determined, wherein the determined food zone (13, 16) is illuminated with a lighting apparatus (6) of the cooking appliance (1), so that the determined food zone (13, 16) is indicated in a visually noticeable manner on the food (10), **characterised in that** the at least one food zone (13, 16) is predetermined by a user by means of a contactless gesture, wherein the gesture is detected by a detection unit (9) of the cooking appliance (1), and the food zone (13, 16) to be generated is identified by evaluating the gesture, wherein a shadow image is generated on a reference surface by means of the gesture and the shadow image is detected by the detection unit (9) of the cooking appliance (1) and the food zone (13, 16) to be is generated is identified by evaluating the shadow image.

2. Method according to claim 1, **characterised in that** information relating to a specific preparation scenario for the determined food zone (13, 16) is received by a control unit (5) of the cooking appliance (1).

3. Method according to claim 2, **characterised in that** the information is input into an input unit by a user.

4. Method according to one of the preceding claims, **characterised in that** the local position of the food zone (13, 16) on the food (10) and/or the size of the food zone (13, 16) is predetermined by the at least one contactless gesture.

5. Method according to one of the preceding claims, **characterised in that** a gesture generation element (19) is held in a light cone (14, 17) of the lighting apparatus (6) and as a result a shadow image is generated, which is detected and evaluated.

6. Method according to claim 5, **characterised in that** the retention of the gesture generation element (19) in the light cone (14, 17) is detected and as a function thereof the movement of the light cone (14, 17) and/or the size of the light cone (14, 17) is coupled to the movement of the gesture generation element (19) and the thus generated gesture so that as a result the food zone (13, 16) is predetermined and is indicated in a visually noticeable manner on the food (10) by means of the lighting.

7. Method according to claim 6, **characterised in that** the generation of the food zone (13, 16) is terminated by a generation termination movement being implemented with the gesture generation element (19).

8. Method according to claim 7, **characterised in that** a rapid removal of the gesture generation element (19) from the light cone (14, 17) is implemented as a generation termination movement.

9. Method according to one of the preceding claims, **characterised in that** food zone information and/or information selected or predetermined for a food zone (13, 16) is projected visually directly onto this food zone (13, 16) for perception by way of a preparation scenario.

10. Method according to one of the preceding claims, **characterised in that** at least two food zones (13, 16) are indicated visually at least partially at the same time on the food (10), wherein to this end the one food zone (13) is indicated visually in a first light colour and the second food zone (16) is indicated visually in a second light colour which differs therefrom.

11. Method according to one of the preceding claims, **characterised in that** a procedure for an in particular movement of the food zone (13, 16) is indicated in a visually noticeable manner on the food zone (13, 16), in particular the procedure to be implemented is indicated symbolically by a symbol (21) moved dynamically and projected onto the food zone (13, 16).

12. Cooking appliance (1) with a housing (2) and a cooking chamber (3) embodied in the housing (2), in which a food (10) can be prepared, wherein the cooking appliance (1) has a lighting apparatus (6), a gesture detection unit (9) and a control unit (5), wherein the cooking appliance (1) is embodied to carry out a method according to one of the preceding claims.

13. Computer program product (12), having commands, which when the program is executed by the cooking appliance according to claim 12, triggers the steps of the method according to claims 1, 2 and 4 - 11 to be executed.

## Revendications

1. Procédé de préparation d'une denrée à cuire (10) dans un espace de cuisson (3) d'un appareil de cuisson (1), dans lequel la denrée à cuire (10) est disposée dans l'espace de cuisson (3) et dans lequel au moins une première zone de denrée à cuire (13, 16) ne concernant pas l'ensemble de la denrée à cuire est déterminée, dans lequel la zone de denrée à cuire déterminée (13, 16) est éclairée avec un dispositif d'éclairage (6) de l'appareil de cuisson (1), de sorte que la zone de denrée à cuire déterminée (13, 16) est rendue perceptible visuellement sur la denrée à cuire (10), **caractérisé en ce que** l'au moins une zone de denrée à cuire (13, 16) est prédéfinie par un geste sans contact d'un utilisateur, dans lequel le geste est saisi par une unité de saisie (9) de l'appareil de cuisson (1) et la zone de denrée à cuire (13, 16) à générer est détectée par évaluation du geste, dans lequel le geste génère une ombre sur une surface de référence et l'ombre est saisie par l'unité de saisie (9) de l'appareil de cuisson (1) et la zone de denrée à cuire (13, 16) à générer est détectée par évaluation de l'ombre.

2. Procédé selon la revendication 1, **caractérisé en ce qu'**une unité de commande (5) de l'appareil de cuisson (1) reçoit des informations au sujet d'un scénario de préparation spécifique pour la zone de denrée à cuire déterminée (13, 16).

3. Procédé selon la revendication 2, **caractérisé en ce que** les informations sont saisies par l'utilisateur dans une unité de saisie.

4. Procédé selon l'une des revendications précédentes, **caractérisé en ce que** la localisation de la zone de denrée à cuire (13, 16) sur la denrée à cuire (10) et/ou la taille de la zone de denrée à cuire (13, 16) est prédéfinie par l'au moins un geste sans contact.

5. Procédé selon l'une des revendications précédentes, **caractérisé en ce qu'**un élément de génération de gestes (19) est maintenu dans un faisceau lumineux (14, 17) du dispositif d'éclairage (6), générant une ombre qui est saisie et évaluée.

6. Procédé selon la revendication 5, **caractérisé en ce que** le maintien de l'élément de génération de gestes (19) dans le faisceau de lumière (14, 17) est saisi et dépendent de cela, le mouvement du faisceau de lumière (14, 17) et/ou la taille du faisceau de lumière (14, 17) est ensuite couplé(e) au mouvement de l'élément de génération de gestes (19) et au geste généré avec celui-ci, de sorte à prédéfinir la zone de denrée à cuire (13, 16) et à la rendre perceptible visuellement sur la denrée à cuire (10) via l'éclairage.

7. Procédé selon la revendication 6, **caractérisé en ce que** la génération de la zone de denrée à cuire (13, 16) se termine par la réalisation d'un mouvement d'achèvement de génération avec l'élément de génération de gestes (19).

8. Procédé selon la revendication 7, **caractérisé en ce qu'**une extraction rapide de l'élément de génération de gestes (19) en dehors du faisceau de lumière (14, 17) est réalisée comme mouvement d'achèvement de génération.

9. Procédé selon l'une des revendications précédentes, **caractérisé en ce que** des informations relatives à la zone de denrée à cuire et/ou des informations (21) sélectionnées ou prédéfinies pour une zone de denrée à cuire (13, 16) concernant un scénario de préparation sont projetées directement sur cette zone de denrée à cuire (13, 16) pour perception visuelle.

10. Procédé selon l'une des revendications précédentes, **caractérisé en ce qu'**au moins deux zones de denrée à cuire (13, 16) sont au moins par moments rendues perceptibles visuellement simultanément sur la denrée à cuire (10), une zone de denrée à cuire (13) étant pour ce faire rendue perceptible visuellement dans une première couleur lumineuse et la deuxième zone de denrée à cuire (16) étant rendue perceptible visuellement dans une deuxième couleur lumineuse différente.

11. Procédé selon l'une des revendications précédentes, **caractérisé en ce qu'**une façon d'agir, en particulier pour un mouvement de la zone de denrée à cuire (13, 16) est indiquée de façon perceptible visuellement sur la zone de denrée à cuire (13, 16), en particulier un symbole (21) projeté sur la zone de denrée à cuire (13, 16) et à déplacement dynamique indique sous forme de symbole la façon d'agir à adopter.

12. Appareil de cuisson (1) avec une carcasse (2) et un espace de cuisson (3) formé dans la carcasse (2), dans lequel une denrée à cuire (10) peut être préparée, dans lequel l'appareil de cuisson (1) présente un dispositif d'éclairage (6), une unité de saisie de gestes (9) et une unité de commande (5), dans lequel l'appareil de cuisson (1) est formé pour la réalisation d'un procédé selon l'une des revendications précédentes.

13. Produit de programme informatique (12) présentant des instructions qui, lors de l'exécution du programme par l'appareil de cuisson selon la revendication 12, font en sorte que les étapes du procédé selon les revendications 1,2 et 4-11 soient exécutées.
